# EUROPÄISCHE PATENTANMELDUNG

(11) **EP 3 989 207 A1**
(43) Veröffentlichungstag der Anmeldung: **27.04.2022**
(21) Anmeldenummer: 21204734.4
(22) Anmeldetag: 26.10.2021
(51) Int. Cl.: G09F 1/06, G09F 3/00, G09F 23/06, G09F 13/22

(54) **ANORDNUNG ZUR VISUALISIERUNG VON ANGEBOTENEN WAREN UND DIENSTLEISTUNGEN**

(30) Priorität: 26.10.2020 DE 202020106106 U
(71) Anmelder: triometrics UG (haftungsbeschränkt), 38102 Braunschweig (DE)
(72) Erfinder: Krieter, Michael C., 38102 Braunschweig (DE)
(74) Vertreter: Einsel, Martin

(57) **Zusammenfassung**

Die Erfindung betrifft eine Anordnung zur Visualisierung von angebotenen Waren und Dienstleistungen, insbesondere in der Gastronomie, wobei ein pyramidenartiger Gegenstand (10) eine flache Unterseite (14) und mehrere in einem Winkel von der flachen Unterseite (14) aufragende Seitenflächen (11, 12, 13) aufweist, wobei ein zweidimensionaler Code (15), insbesondere ein QR-Code, auf mindestens einer der Seitenflächen (11, 12, 13) aufgebracht ist, wobei ein elektronisches Gerät (20), mit einer Kamera (21) und mit einem Display (22) zur Anzeige von zur Verfügung gestellten Informationen versehen ist und mit dem Internet verbindbar ist, wobei einer Website (30) im Internet das mit der Kamera (21) aufgenommene Bild zugänglich ist, wobei die Website (30) so aufgebaut und ausgestattet ist, dass sie den zweidimensionalen Code (15), insbesondere QR-Code, erkennt und entschlüsselt und abhängig davon, dem elektronischen Gerät (20) eine digitale Abbildung einer Information zu den angebotenen Waren und Dienstleistungen zur Darstellung auf dem Display (22) zur Verfügung stellt.

## Beschreibung

Die Erfindung betrifft eine Anordnung zur Visualisierung von angebotenen Waren und Dienstleistungen, insbesondere in der Gastronomie.

Gäste in Restaurants oder anderen Speisegaststätten und Veranstaltungsorten benötigen eine Möglichkeit, mit der sie eine Auswahl unter den Angeboten in Waren und Dienstleistungen treffen können, um anschließend die für die Bedienung zuständigen Personen über die getroffene Auswahl zu informieren und die Speisen und Getränke oder sonstigen Dienstleistungen zu bestellen.

Um diese Auswahl zu treffen, gibt es Speisekarten. Speisekarten sind vorgedruckte Auflistungen von angebotenen Speisen, die in dem Restaurant an dem Tag des Besuches erhältlich sind, dazu weitere Informationen wie etwa die Zubereitungsart oder auch die zugeordneten Preise oder auch andere Informationen. Bei Getränken, wie beispielsweise Weinen, ist es üblich, auch Informationen über Anbaugebiete, Jahrgänge oder anderes zu geben, bei Speisen ist es in den letzten Jahren üblich geworden, verwendete Zusatzstoffe oder die Eignung für Diabetiker, Vegetarier oder andere Gäste mit besonderen Wünschen anzubieten.

Die Zahl der grundsätzlich auswählbaren Speisen und Getränke hat gerade in den letzten Jahrzehnten zugenommen. Der Bedarf an zusätzlichen Erläuterungen ist ebenso ansteigend, wozu auch die zunehmende Vielfalt an angebotenen Speisen beigetragen hat, die auf Grund der immer interessanter werdenden Küchen fremder Herkunft zurück zu führen ist, denn die Namen von chinesischen, indischen und türkischen Gerichten sind nicht jedem Kunden eines Restaurants ohne weiteres geläufig.

Diese Vielzahl an zunehmenden Informationen führt dazu, dass die Speisekarten immer umfangreicher werden, um diese Informationen bereitstellen zu können.

Auf der anderen Seite sind unhandliche und schwergewichtige Speisekarten, die das Volumen und die Form von großformatigen Büchern annehmen können, auch mit Nachteilen behaftet. So stören beispielsweise diese Speisekarten, während man eine Vorspeise zum Testen zu sich nimmt und es ist auch wichtig, dass sie stets wieder eingesammelt werden können. Für das Bedienungspersonal ist es darüber hinaus von Nachteil, wenn sie zu bestimmten angebotenen Gerichten in der Speisekarte mitteilen müssen, diese seien nunmehr entgegen des Angebotes, gar nicht mehr verfügbar, weil die benötigten Zutaten verbraucht wären. Darüber hinaus sind Speisekarten auch jahreszeitlich bedingten Änderungen unterworfen, da bestimmte Gerichte nur zu bestimmten Jahreszeiten nachgefragt werden oder auch nur zu bestimmten Jahreszeiten im Angebot sind, beispielsweise frischer Spargel oder Pfifferlinge oder auch Gänsebraten. Der Betreiber des Restaurants und das Bedienungspersonal müssen also mehrere Versionen der Speisekarten vorhalten oder bestimmte Seiten sorgfältig austauschen.

Es gibt auch Restaurants, die zur Behebung dieses Problems extra Tafeln im Restaurant aufhängen, auf denen bestimmte nicht in der Speisekarte verzeichnete angebotene Speisen und Getränke handschriftlich aktuell zusätzlich eintragen werden. Diese Eintragungen können dann täglich wechseln und wenn die dort genannten Angebote vergriffen werden, werden sie weggewischt. Auch das ist mit zusätzlicher Arbeit verbunden und für den Gast mit dem zusätzlichen Aufwand, neben der Speisekarte noch weitere Angebote berücksichtigen zu müssen.

Für die Anbieter der Speisen und Getränke und das Bedienungspersonal und die Betreiber der Restaurants und ebenso auch für deren Kunden, die in den Restaurants gerne speisen möchten, entsteht daher der Wunsch, ohne diesen erheblichen Aufwand und ohne die Belastung mit umfangreichen Nachschlagewerken auf den zum Speisen vorgesehenen Tischen trotzdem eine Auswahl treffen zu können.

Aufgabe der vorliegenden Erfindung ist es, einen Vorschlag für eine Anordnung zu unterbreiten, mit der eine solche Auswahl auf anderem Wege erfolgen kann.

Diese Aufgabe wird erfindungsgemäß bei einer gattungsgemäßen Anordnung gelöst durch einen pyramidenartigen Gegenstand, der eine flache Unterseite und mehrere in einem Winkel von der flachen Unterseite aufragende Seitenflächen aufweist sowie durch einem zweidimensionalen Code, insbesondere einen QR-Code, der auf mindestens einer der Seitenflächen aufgebracht ist, durch ein elektronisches Gerät, dass mit einer Kamera und mit einem Display zur Anzeige von zur Verfügung gestellten Informationen, versehen und mit dem Internet verbindbar ist, mit einer Website im Internet, der das mit der Kamera aufgenommene Bild zugänglich ist, wobei die Website so aufgebaut und ausgestattet ist, dass sie den zweidimensionalen Code, insbesondere QR-Code, erkennt und entschlüsselt und abhängig davon, dem elektronischen Gerät eine digitale Abbildung einer Information zu den angebotenen Waren und Dienstleistungen zur Darstellung auf dem Display zur Verfügung stellt.

Mit einer derartigen Anordnung entsteht eine solche Möglichkeit, mit der herkömmliche Speisekarten nicht nur ersetzt werden, sondern für den Kunden auch sehr viel leichter bedienbar und verstehbarer sind, die deutlich weniger Platz wegnehmen, dafür aber wesentlich auffälliger sind und die auch für den anbietenden Betreiber des Restaurants, also beispielsweise dem Gastwirt und dem Bedienungspersonal, große Vorteile bieten. So müssen nicht dutzende von Speisekarten neu geschrieben, verteilt, geprüft und natürlich auch regelmäßig gereinigt werden, sondern das ganze kann zentral aus dem Büro heraus erfolgen, wobei auf der Website auch problemlos Bilder verwendet und ausgetauscht, Preise angepasst und Sonderkarten etwa während der Spargelsaison eingepflegt werden können.

Verwendet und für den Endverbraucher sichtbar sind die pyramidenartigen Gegenstände, insbesondere gleichschenklige drei- oder auch vierseitige Pyramidenkörper.

Diese Form der Gegenstände hat große Vorteile. Ein auf der Seitenfläche angebrachter zweidimensionaler Code, insbesondere ein sogenannter QR-Code (quick response code) kann besonders praktisch mit einem elektronischen Gerät wie beispielsweise einem Smartphone fotografiert bzw. eingelesen werden. Der Benutzer kann sein Smartphone von schräg oben auf den pyramidenartigen Gegenstand richten, ohne sich mühsam zu bücken, in die Knie zu gehen oder andere Maßnahmen zu treffen. Er muss den pyramidenartigen Gegenstand auch nicht in die Hand nehmen, sondern, kann ihn dort stehen lassen, wo er sich befindet.

Durch die ungewöhnliche Form, die gerade in einem Restaurant sehr auffällt, gewinnt ein solcher pyramidenartiger Gegenstand auch sofort die Aufmerksamkeit des Kunden. Er muss also nicht lange suchen, ob sich ein solcher pyramidenartiger Gegenstand etwa unter Servietten oder Salzstreuern befindet.

Ein derartiger pyramidenartiger Gegenstand nimmt trotzdem nicht sehr viel Platz weg und kann auch leicht zur Seite gestellt werden. Durch die glatten Außenflächen ist er auch sehr leicht zu reinigen, wenn doch beispielsweise Tomatensoße oder eine andere, in Restaurants übliche Flüssigkeit oder Verunreinigung auf ihn fällt.

Auch das Material kann sehr unterschiedlich sein. Es kann sich um Kunststoff, um Holz oder auch um Metall handeln.

Die zweidimensionalen Codes können aufgedruckt oder aufgemalt sein, es ist aber auch möglich, Aufkleber zu verwenden, die Codes zu gravieren oder ätzen oder auch den gesamten pyramidenartigen Körper beleuchtbar zu gestalten.

Die zweidimensionalen Codes können auf einer der drei oder vier Seitenflächen eines pyramidenartigen Körpers angebracht werden oder aber auch auf mehreren Seiten, um unterschiedliche Möglichkeiten anzubieten. So gibt es auch die Möglichkeit über den einen zweidimensionalen Code eine Speisekarte mit Preisangaben aufzurufen und über einen anderen zweidimensionalen Code auf der gleichen Pyramide eine Speisekarte ohne diese Preisangabe, wenn diese beiden Möglichkeiten gewünscht sind.

Bei einer bevorzugten Ausführungsform ist es vorgesehen, dass der pyramidenartige Gegenstand mit einem Leuchtelement ausgestattet ist, welches bevorzugt an der Spitze des pyramidenartigen Gegenstandes angeordnet ist.

Auf diese Weise kann der pyramidenartige Gegenstand gleich dazu genutzt werden, zusätzlich anzuzeigen, ob ein bestimmter Tisch in dem Restaurant besetzt oder frei ist und/oder das Bedienungspersonal kann der Anzeige entnehmen, ob der Kunde eine Bestellung aufgeben möchte oder nicht.

Mittels der Erfindung entsteht eine ausgearbeitete, hoch komplexe und doch einfach zu nutzende Möglichkeit der Informationsbereitstellung innerhalb insbesondere von gastronomischen Einrichtungen, aber auch bei anderen Waren und Dienstleistungen. Insbesondere gilt dies für Unternehmen mit einem hohen Kundenkontakt im Tourismus oder auch sonst in der Gastronomie.

Speisen, Produkte oder Dienstleistungen werden hygienisch und umweltfreundlich präsentiert. In einer bevorzugten Ausführungsform ist eine COVID-Registrierung integriert. Mit dieser COVID-Registrierung lässt sich ein schnelles Eingeben der Daten und einfaches Auschecken ermöglichen. Anhand der Besucherliste mit allen relevanten Informationen lassen sich die benötigten Informationen rasch anzeigen und ausdrucken. Auch eine Integration anderer Lösungen ist möglich. Ebenso kann diese erfindungsgemäße Informationsquelle mit einer sehr hohen Anzahl unterschiedlichster Designs aus verschiedenen Materialien realisieren, beispielsweise mit Holz, Metall, Keramik, Marmor oder Glas.

In einer weiteren Ausführungsform wird die Kernstruktur, also der pyramidenartige Gegenstand, im Inneren beleuchtet, bevorzugt mit einer LED. Mit derartigen Konzepten ist es möglich, bei entsprechend vorbereiteten Seitenflächen des pyramidenartigen Gegenstandes diesen farbig wechselnd zu beleuchten. Dadurch lässt sich etwa der Status einer bestimmten Pyramide bzw. des Tisches in einer gastronomischen Einrichtung wechselnd anzeigen und zwar sowohl für die Gäste wie auch für die Betreiber der gastronomischen Einrichtung. Ein Tisch kann als frei oder als besetzt deklariert werden, Gäste können auch nachträglich zusätzliche Wünsche signalisieren ohne sich auffallend benehmen zu müssen.

Für den Betreiber der gastronomischen Einrichtung wird es durch die Erfindung generell möglich, mit ohnehin vorhandenen Geräten wie beispielsweise einem PC oder einem Laptop auch die Inhalte der Informationen anzupassen, beispielsweise weitere Gerichte hinzuzufügen oder saisonale Gerichte zu entfernen oder auch die Preise zu ändern.

Einfach und flexibel können Gutscheine, Aktionen, Saisonkarten oder andere Verweise oder Hinweise auf Sehenswürdigkeiten und Veranstaltungen des gastronomischen Betriebes selbst oder auch in seiner Umgebung präsentiert werden.

Mit der Feedback-Funktion kann der Kunde direkt in Kontakt mit dem Gastgeber, also dem Betreiber der gastronomischen Einrichtung, treten.

Weitere bevorzugte Ausführungsformen und Vorteile der vorliegenden Erfindung werden im Anschluss anhand von schematischen Darstellungen erläutert.

Im Folgenden werden anhand der Figuren einige Ausführungsbeispiele der Erfindung näher beschrieben. Es zeigen:
- **Figur 1**: eine Vorderansicht eines Gegenstandes zur Verwendung mit der Erfindung;
- **Figur 2**: eine Draufsicht auf den Gegenstand aus Figur 1;
- **Figur 3**: eine Bodensicht auf den Gegenstand aus den Figuren 1 und 2;
- **Figur 4**: eine schematische Darstellung eines ersten Schrittes eines Benutzungsvorgangs mit der erfindungsgemäßen Anordnung;
- **Figur 5**: eine schematische Ansicht eines zweiten Schrittes des Benutzungsvorgangs aus Figur 4; und
- **Figur 6**: eine schematische Ansicht eines dritten Schritts des Benutzungsvorgangs aus den Figuren 4 und 5.

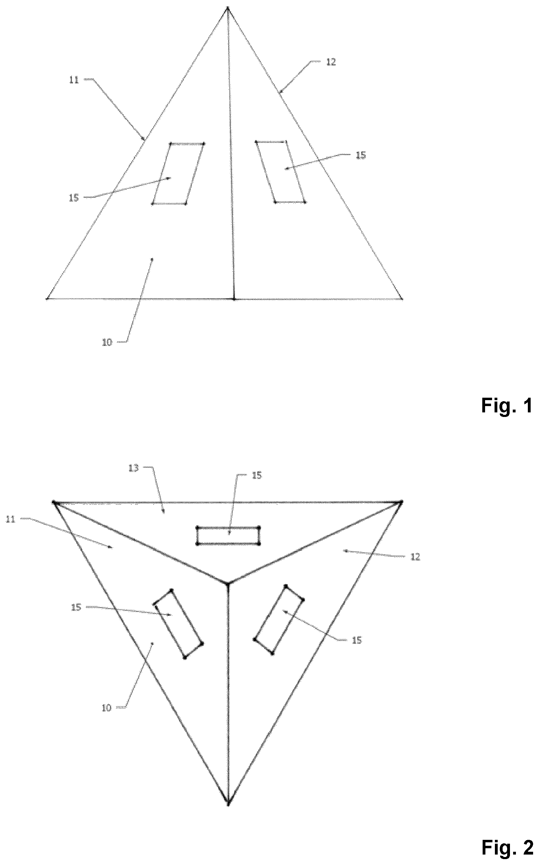

In der **Figur 1** ist eine Vorderansicht eines Gegenstandes 10 dargestellt, der in der vorliegenden Erfindung eine wesentliche Rolle spielt. Der Gegenstand 10 ist pyramidenartig aufgebaut. Er kann auf einer Tischfläche eines (nicht dargestellten) Tisches etwa in einem Restaurant aufgestellt werden. In der Figur 1 sieht man eine erste Seitenfläche 11 und eine zweite Seitenfläche 12, die beide gleichschenklige Dreiecke sind und sich in einem Punkt oberhalb der gedachten Tischfläche schneiden. Die beiden gleichschenkligen Dreiecke der Seitenflächen 11 und 12 bilden miteinander eine Verbindungslinie, die durch den erwähnten Schnittpunkt führt.

In der dargestellten Ausführungsform befinden sich auf den beiden Seitenflächen 11 und 12 jeweils angedeutet ein zweidimensionaler Code 15, der nicht identisch sein muss, und bevorzugt wird hier ein sogenannter QR-Code verwendet.

In der **Figur 2** sieht man den pyramidenartigen Gegenstand 10 aus der Figur 1 jetzt in Draufsicht. Man sieht also von oben auf den Schnittpunkt und sieht von diesem drei gleichschenklige Seitenflächen 11, 12, 13 nach unten ragen, wobei diese drei Seitenflächen 11, 12, 13 jeweils einen zweidimensionalen Code 15 tragen.

Man kann auch bereits erkennen, dass die von dem Schnittpunkt abgewandten Seiten der gleichschenkligen Dreiecke miteinander wiederum ein Dreieck bilden, und zwar ein gleichseitiges.

Es sei darauf hingewiesen, dass andere hier nicht dargestellte Ausführungsformen auch vierseitige pyramidenartige Gegenstände 10 bilden können.

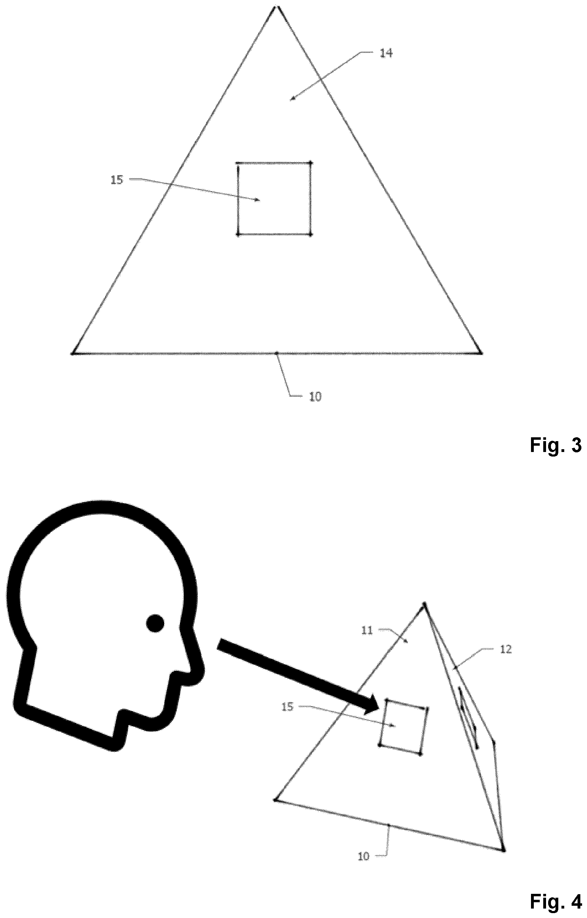

In der **Figur 3** sieht man jetzt den pyramidenartigen Gegenstand aus den Figuren 1 und 2, und zwar von unten gesehen. Man sieht also auf die Unterseite 14. Auf dieser Unterseite 14 ist auch ein zweidimensionaler Code 15 aufgebracht. Dies ist möglich, aber in sehr viel Ausführungsformen nicht erforderlich, da bei den meisten Ausführungsformen eine Betrachtung des pyramidenartigen Gegenstandes 10 von unten nicht nötig ist.

Der pyramidenartige Gegenstand 10 aus den Figuren 1 bis 3 ist hier also ein Tetraeder. Er kann aus sehr unterschiedlichen Materialen bestehen, beispielsweise aus Kunststoff, Holz oder auch aus Metall. Seine Größe wird bevorzugt eine Kantenlänge von mehr als 8 cm und eine Spitzenlänge von mehr als 14 cm aufweisen. Dazu ist er besonders gut handhabbar und hat eine auch für den Kunden angenehme Größe, da er nicht unbeabsichtigt durch beispielsweise eine Zeitung abgedeckt und nicht wieder auffindbar werden kann. Die Seitenflächen 11, 12, 13 und die Unterseite 14 sind bevorzugt leicht abwaschbar und mit einem angenehmen Äußeren versehen.

Darüber hinaus tragen eine oder mehrere der Seitenflächen 11, 12, 13 und der Unterseite 14 den zweidimensionalen Code 15. Dieser zweidimensionale Code kann als Aufkleber, als Ätzung, als Gravur oder auch durch Bemalung oder Bedruckung aufgebracht werden. Es ist auch möglich, den pyramidenartigen Gegenstand mit einer inneren Beleuchtung zu versehen oder auch auf den Flächen selbst Logos oder andere Bedruckungen vorzunehmen.

Mit Kantenlängen von 8 cm oder einigen cm mehr nehmen die pyramidenartigen Gegenstände nur wenig Platz auf einem Tisch auf einem Restaurant ein und sind somit nicht störend. Dies fällt insbesondere im Vergleich zu herkömmlichen Speisekarten auf.

Ein weiteres Element der erfindungsgemäßen Anordnung wird üblicherweise vom Kunden zur Verfügung gestellt und besteht in einem elektronischen Gerät 20, dass mit einer Kamera 21, einer Internetverbindung und einem Display 22 ausgestattet ist. Es kann sich dabei um ein Smartphone, ein Tablet oder ein ähnliches Gerät handeln. Derartige elektronische Geräte 20 ermöglichen eine Funktionsweise, wie sie in den Figuren 4 bis 6 dargestellt ist. Man sieht in der **Figur 4** schematisch, dass ein Benutzer eine der Seitenflächen 11, 12, 13 mit einer Darstellung des zweidimensionalen Codes 15 erblickt und erkennt.

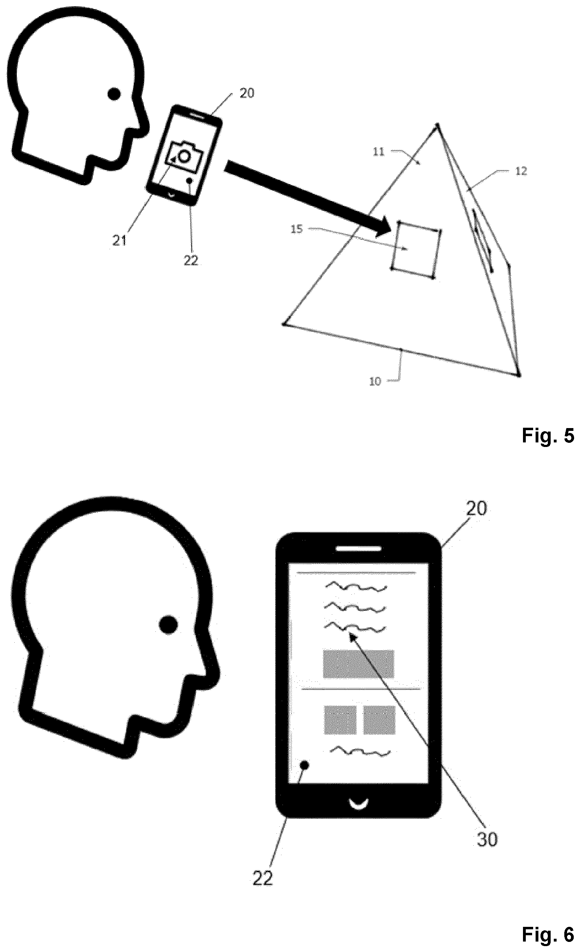

In der **Figur 5** ist dann dargestellt, dass der Benutzer sein elektronisches Gerät 20 mit der Kamera 21 in Position bringt, um den zweidimensionalen Code 15 auf der Seitenfläche mit der Kamera 21 aufzunehmen.

Nachdem der Benutzer diesen Vorgang durchgeführt hat, erkennt die Website 30 (nur schematisch angedeutet) den zweidimensionalen Code und abhängig davon und von den Voreinstellungen, die der Betreiber des Restaurants vorgenommen hat, werden dann Informationen oder Dokumente angezeigt, wie man in **Figur 6** erkennen kann. Es kann sich beispielsweise um die Speisekarte mit verschiedenen Speisen, deren Beschreibung und Preisen handeln, dabei ist auch eine Anordnung sortiert nach Vorgerichten, Hauptgerichten und Nachspeisen, nach Getränken und ähnlichem möglich. Natürlich ist der Vorgang nicht auf die Darstellung einer Seite begrenzt, sondern es kann auch durch scrollen oder in anderer Form eine wesentlich größere Bandbreite an Informationen angezeigt werden.

Die Website 30 kann auch stets an aktuelle weitere technische Entwicklungen oder eben auch an eine Änderung der angebotenen Speisen und Getränke angepasst werden.

In einem Restaurant wird man eine Vielzahl von pyramidenartigen Gegenständen 10 vorrätig halten und auf jedem Tisch zumindest einen dieser Gegenstände 10 anordnen. Da die Gegenstände 10 beliebig häufig verwendbar sind und die Aktualisierungen der Speisen und Getränke nicht einen einzelnen pyramidenartigen Gegenstand festlegt, muss der Betreiber des Restaurants nicht zuvor sorgfältig überlegen, welche Druckauflage er für seine Speisekarten in Auftrag gibt. Er muss lediglich eine für alle Fälle ausreichende Menge an pyramidenartigen Gegenständen vorrätig haben. Die Aktualisierung wird auf der Website 30 vorgenommen.

Möglich wäre es auch, anstelle des menschlichen Bedienpersonals eine Bestellung direkt vom elektronischen Gerät 20 aus vorzunehmen, wenn das bevorzugt wird, etwa durch Antippen der ausgewählten Speisen oder Getränke. Die ausgewählten Speisen oder Getränke könnten dann automatisch in der Küche oder einer Zentrale angezeigt werden und dort dann die Zubereitung erfolgen.

Anhand eines Beispiels wird die Vorgehensweise durch einen Gast eines Restaurants näher beschrieben. Der Gast des Restaurants betritt den Gastraum, setzt sich an einen freien Tisch und sieht dort den pyramidenartigen Gegenstand 10, mit dem aufgedruckten zweidimensionalen Code 15. Da er den zweidimensionalen Code 15 und dessen Funktionsweise erkennt, nimmt er das von ihm mitgeführte elektronische Gerät 20, beispielweise sein eigenes, sonst zum Telefonieren genutztes Smartphone, öffnet die Funktion der Kamera 21 beispielsweise mittels einer Kamera - App und hält die Kamera 21 vor den zweidimensionalen Code 15. Das elektronische Gerät 20 erkennt und interpretiert den zweidimensionalen Code 15 und löst den Aufruf der zugehörigen Website 30 auf. Diese Website 30 stellt nun in dem dargestellten Ausführungsbeispiel die Speisekarte des entsprechenden Restaurants zur Verfügung. Der Betreiber, also Gastwirt oder Anbieter hat zuvor vorgegeben, was der Gast in diesem Fall zu sehen bekommt.

Dies kann sowohl eine statische Speisekartendatei sein als auch ein dynamisches, filterbares Formular. Dieses Formular kann etwa dem Gast helfen, eine Selektion zu treffen, welche Gerichte er gerade wählen könnte, etwa eine Selektion auf vegetarische Kost oder dergleichen. Automatisch kann der Gast dann auch ausschließen, wenn er auf bestimmte Inhaltsstoffe allergisch reagiert, so dass diese ihm gar nicht angeboten werden.

Die Auswahl der Speisen oder Getränke kann dann in einem weiteren Schritt mit der Bestellung beim Bedienpersonal des Restaurants verknüpft werden.

Die weiteren zweidimensionalen Codes auf dem pyramidenförmigen Gegenstand 10 können beispielsweise auch dazu dienen, in aktuellen Fällen die persönlichen Daten einzugeben, die für die Bestimmungen zur Erfassung der Covid-19-Vorschriften einzugeben sind.

Das elektronische Gerät 20 des Kunden kann außerhalb dieses Bestellvorgangs wie herkömmlich und vom Benutzer gewohnt genutzt werden. Er kann also auch telefonieren oder im Internet surfen, nachdem er bestellt hat oder nachdem der gesamte Vorgang abgeschlossen ist.

Die pyramidenförmige Form des Gegenstandes 10 hat den großen Vorteil, dass sie nicht umfällt, da der Schwerpunkt über der Unterseite 14 liegt. Eine pyramidenartige Form mit glatten Seitenflächen 11, 12, 13 kann auf einem Tisch in einem Restaurant problemlos mit Soße oder anderen Lebensmitteln bekleckert werden und ist dann trotzdem leicht zu reinigen und die elektronischen Eigenschaften der pyramidenartigen Form des Gegenstandes 10 werden dadurch auch nicht nachteilig beeinträchtigt, da sie nur abgelesen werden. Es kann sehr edles Material verwendet werden oder auch solches, das auf den Betreiber eindeutig hinweist.

Die pyramidenartigen Gegenstände 10 nehmen wesentlich weniger Fläche weg als eine Speisekarte. Dies gilt auch dann, wenn diese Speisekarten nicht in Papierform, sondern ihrerseits als großformatige Displays eingesetzt werden. Es ergeben sich große Vorteile für den Gast. Die erfindungsgemäßen pyramidenartigen Gegenstände haben einen hohen Wiedererkennungswert, sind sympathisch in ihrer Erscheinung und haben eine einfache, keinerlei Erläuterung benötigende Bedienung.

Bei einem häufigen Besuch als Stammgast können persönliche Daten auch vereinfacht oder schematisch eingegeben oder abgerufen werden, wenn der Stammgast das so wünscht.

Für den Betreiber des Restaurants, also in erster Linie den Gastwirt - ergeben sich ebenfalls große Vorteile, so können die angebotenen Speisen und Getränke jederzeit aktualisiert werden, Preisschwankungen, etwa bei Spezialitäten wie besonderen Fischarten oder teuren Spezialitäten können leicht eingepflegt werden, ohne, dass die Speisekarte einen retuschierten Eindruck macht.

Die Seitenflächen 11, 12, 13 der pyramidenartigen Gegenständen 10 sind flexibel nutzbar, für den WLAN-Zugriff, auch etwa für eine Tischreservierung, für Sonderaktionen und andere Veranstaltungen.

Auch eine automatisierte Verarbeitung von Zahlungsvorgängen kann in ähnlicher Form zugänglich gemacht werden.

### Bezugszeichenliste

- 10: Gegenstand, insbesondere pyramidenartiger Gegenstand
- 11: erste Seitenfläche des Gegenstandes 10
- 12: zweite Seitenfläche des Gegenstandes 10
- 13: dritte Seitenfläche des Gegenstandes 10
- 14: Unterseite des Gegenstandes 10
- 15: zweidimensionaler Code auf einer Seitenfläche des Gegenstandes 10
- 20: elektronisches Gerät insbesondere Smartphone
- 21: Kamera des elektronischen Gerätes 20
- 22: Display des elektronischen Gerätes 20
- 30: Website

## Patentansprüche

1. Anordnung zur Visualisierung von angebotenen Waren und Dienstleistungen, insbesondere in der Gastronomie,
**gekennzeichnet durch** einen pyramidenartigen Gegenstand (10), der eine flache Unterseite (14) und mehrere in einem Winkel von derflachen Unterseite (14) aufragende Seitenflächen (11, 12, 13) aufweist,
**gekennzeichnet durch** einen zweidimensionalen Code (15), insbesondere einen QR-Code, der auf mindestens einer der Seitenflächen (11, 12, 13) aufgebracht ist,
**gekennzeichnet durch** ein elektronisches Gerät (20), das mit einer Kamera (21) und mit einem Display (22) zur Anzeige von zur Verfügung gestellten Informationen versehen und mit dem Internet verbindbar ist,
**gekennzeichnet durch** eine Website (30) im Internet, der das mit der Kamera (21) aufgenommene Bild zugänglich ist, wobei die Website (30) so aufgebaut und ausgestattet ist, dass sie den zweidimensionalen Code (15), insbesondere QR-Code, erkennt und entschlüsselt und abhängig davon, dem elektronischen Gerät (20) eine digitale Abbildung einer Information zu den angebotenen Waren und Dienstleistungen zur Darstellung auf dem Display (22) zur Verfügung stellt.

2. Anordnung nach Anspruch 1, **dadurch gekennzeichnet,**
**dass** der pyramidenartige Gegenstand (10) eine dreieckige, gleichseitige Unterseite (14) und drei oder vier zueinander gleiche Seitenflächen (11, 12, 13) aufweist, welche sich in einem Punkt schneiden.

3. Anordnung nach Anspruch 1 oder 2, **dadurch gekennzeichnet,**
**dass** der pyramidenartige Gegenstand (10) mit einem Leuchtelement ausgestattet ist, welches bevorzugt an der Spitze des pyramidenartigen Gegenstandes (10) angeordnet ist.

4. Anordnung nach einem der vorstehenden Ansprüche,
**dadurch gekennzeichnet,**
**dass** der pyramidenartige Gegenstand (10) mit zumindest teilweise transparenten oder lichtaufnehmenden und von außen erkennbar Licht wiedergebenden Seitenflächen (11, 12, 13) versehen ist, und
**dass** im Inneren des pyramidenartigen Gegenstands (10) ein Leuchtelement, insbesondere eine LED, vorgesehen ist.

5. Anordnung nach Anspruch 4,
**dadurch gekennzeichnet,**
**dass** das Leuchtelement, insbesondere die LED, im Inneren des pyramidenartigen Gegenstandes (10) verschiedene Farbtöne annehmen kann oder mehrere, wechselnd aktive Leuchtelemente unterschiedlichen Farbtons vorgesehen ist.

6. Anordnung nach einem der vorstehenden Ansprüche,
**dadurch gekennzeichnet,**
**dass** ein COVID-Registrierungselement vorgesehen ist, welches zur Eingabe von Daten und/oder zum Aufnehmen von statusrelevanten Bildern, beispielsweise QR-Codes, vorgesehen ist.

7. Anordnung nach einem der vorstehenden Ansprüche,
**dadurch gekennzeichnet,**
**dass** mehrere der Seitenflächen (11, 12, 13) mit zweidimensionalen Codes (15) ausgestattet sind, die unterschiedliche Inhalte der Website (30) ansteuern

8. Anordnung nach einem der vorstehenden Ansprüche,
**dadurch gekennzeichnet,**
**dass** der pyramidenartige Gegenstand ein gleichmäßiger Tetraeder ist.

9. Anordnung nach einem der vorstehenden Ansprüche,
**dadurch gekennzeichnet,**
**dass** der pyramidenartige Gegenstand (10) eine Kantenlänge seiner Unterseite (14) von 5 cm oder mehr und/oder eine Spitzenlänge von der Unterseite (14) zur Spitze der Seitenflächen (11, 12, 13) von mehr als 10 cm besitzt.

10. Anordnung nach einem der vorstehenden Ansprüche,
**dadurch gekennzeichnet,**
**dass** der pyramidenartige Gegenstand (10) eine quadratische Unterseite (11) und vier Seitenflächen gleicher Größe besitzt, die sich in einem Punkt schneiden.
